**Europäisches Patentamt**

**European Patent Office**

**Office européen des brevets**

(19)

(11) Veröffentlichungsnummer: **0 014 712**
**B1**

(12) # EUROPÄISCHE PATENTSCHRIFT

(45) Veröffentlichungstag der Patentschrift:
**20.01.82**

(51) Int. Cl.³: **F 16 L 47/02,** B 29 C 27/02

(21) Anmeldenummer: **79900368.6**

(22) Anmeldetag: **19.04.79**

(86) Internationale Anmeldenummer:
**PCT/CH 79/00054**

(87) Internationale Veröffentlichungsnummer:
**WO 79/00961 (15.11.79** Gazette **79/23)**

(54) **SCHWEISSMUFFE AUS THERMOPLASTISCHEM MATERIAL.**

(30) Priorität: **21.04.78 CH 4344/78**

(43) Veröffentlichungstag der Anmeldung:
**03.09.80 Patentblatt 80/18**

(45) Bekanntmachung des Hinweises auf die Patenterteilung:
**20.01.82 Patentblatt 82/3**

(84) Benannte Vertragsstaaten:
**FR**

(56) Entgegenhaltungen:
**DE-B-1 071 433**
**FR-A-2 182 587**

(73) Patentinhaber: **STURM, Werner, Allerheiligenstrasse 624, CH-4614 Hägendorf (CH)**
Patentinhaber: **VON ROLL AG, CH-4563 Gerlafingen (CH)**

(72) Erfinder: **STURM, Werner, Allerheiligenstrasse 624, CH-4614 Hägendorf (CH)**

(74) Vertreter: **Meyer, Reinhard, Dipl.-Ing., c/o Dr. A. R. EGLI & CO Patentanwälte Postfach 473, CH-8034 Zürich (CH)**

## Schweissmuffe aus thermoplastischem Material

Die Erfindung betrifft eine Schweissmuffe mit einem hülsenförmigen Muffenkörper aus thermoplastischem Material zum Verbinden rohrförmiger thermoplastischer Teile, wobei die Erzeugung der zum Schmelzen des thermoplastischen Materials benötigten Schweisswärme in den Windungen einer in der Verbindungszone des Muffenkörpers angeordneten Wicklung eines elektrischen Widerstandsdrahtes durch elektrischen Strom erfolgt.

Schweissmuffen zum Verbinden rohrförmiger Teile, wie Leitungen, Formstücke und Ventile, in Leitungsnetzen aus thermoplastischem Material sind in verschiedenen Ausführungen bekannt (z.B. aus der DE-B-1071 433). Diese sind entweder ein Teil der Leitungsteile, Formstücke und Ventile, d.h. integral mit diesen Teilen verbunden, oder sind als unabhängige Bauteile in Form eines hülsenförmigen Körpers ausgebildet. Für das Verbinden der einzelnen rohrförmigen Teile werden diese an ihren Enden mit Hilfe der Schweissmuffe ineinandergesteckt und hierauf miteinander verschweisst, wobei die zum Schmelzen des thermoplastischen Materials in der Verbindungszone der thermoplastischen Teile notwendige Wärme durch Zuführen von elektrischem Strom an einen Widerstandskörper erzeugt wird.

Bei einer bekannten und häufig verwendeten Ausführungsform der Schweissmuffe wird im Bereich der Verbindungszone des Muffenkörpers als Widerstandskörper eine Wicklung eines elektrischen Widerstandsheizdrahtes mit in axialer Richtung mit Abstand angeordneten Windungen vorgesehen. Die einzelnen Windungen der Wicklung liegen hierbei an der Innenwandung des Muffenkörpers. Die Anordnung an der Innenwandung des Muffenkörpers bedeutet hierbei, dass die Windungen des Widerstandsheizdrahtes möglichst nahe an der Innenwandung liegen und die dünne thermoplastische Materialschicht nur eine geringe Stärke, z.B. 0,5 mm, besitzt und in erster Linie als Berührungsschutz dienen soll. Je näher der elektrische Widerstandsheizdraht an der Innenwandung liegt, desto zuverlässiger erfolgt die Verschweissung der zu verbindenden Teile.

Nun treten jedoch in der Praxis bei der Herstellung solcher Schweissmuffen Probleme auf, die der geschilderten Ideallösung einer Schweissmuffe mit unmittelbar an der Innenwandung des Muffenkörpers liegender Heizwicklung entgegenwirken. Es ist deshalb erforderlich, die Herstellung einer solchen Schweissmuffe näher zu untersuchen. Für die Herstellung einer bekannten Elektro-Schweissmuffe mit elektrischer Heizwicklung wird beispielsweise ein isolierter Heizdraht in Windungen auf einen Dorn gewickelt, der anschliessend in einer Form umspritzt wird. Bei dieser Herstellungsmethode ist der Dorn immer grösser als der nachher entformte Teil, der beim Erkalten einer bestimmten Schrumpfung unterliegt. Durch die Schrumpfung des Muffenkörpers ist nicht zu vermeiden, dass der umspritzte Heizdraht unter einer Druckspannung steht. Beim Anschliessen der elektrischen Heizung an eine solche Schweissmuffe dehnt sich der Widerstandsdraht aus und nimmt, da er das unmittelbar ihn umgebende thermoplastische Material zum Schmelzen bringt, eine Lage ein, die einem grösseren Durchmesser entspricht als dem auf den Dorn gewickelten Kreisdurchmesser der Wicklungswindungen.

Bei einer anderen Herstellungsart wird der Widerstandsheizdraht in eine vorher auf der Innenseite des Muffenkörpers eingearbeitete Nut eingelegt. Auch bei dieser Herstellungsart tritt beim Anschliessen der elektrischen Heizung eine Längsausdehnung des Widerstandsheizdrahtes und damit das Entfernen der Wicklung von der Verbindungszone auf.

Bei den erwähnten bekannten Ausführungsformen der Schweissmuffe tritt mit der Herstellung von Verbindungen eine die Verbindungsqualität verschlechternde Erscheinung auf, die sich in einer Bewegung der Windungen der Heizdrahtwicklung äussert. Der Abstand der Windungen von der Verbindungszone kann unter Umständen so gross werden, dass ein vollständiges Aufschmelzen der Innenwandung nicht mehr erfolgt, so dass die für eine Schweissung typische molekulare Materialverbindung im Bereich der Verbindungszone der zu verbindenden thermoplastischen Teile nicht mehr stattfindet, sondern lediglich eine mehr oder weniger starke Schrumpfverbindung.

Der Erfindung liegt deshalb die Aufgabe zugrunde, eine Schweissmuffe der eingangs beschriebenen Art unter Vermeidung der Nachteile der bekannten Ausführungsformen so auszugestalten, dass eine sichere und einwandfreie Schweissung an der Verbindungszone der zu verbindenden thermoplastischen Teile gewährleistet ist.

Diese Aufgabe wird gemäss der Erfindung dadurch gelöst, dass die an der Innenwandung des Muffenkörpers angeordneten Windungen der Widerstandsheizdrahtwicklung in Umfangsrichtung mit Abstand angeordnete, mit einer Unstetigkeit des Windungsverlaufs versehene Verformungsstellen aufweisen. Dadurch wird erreicht, dass beim Anschliessen der elektrischen Heizung an die Schweissmuffe eine Bewegung des Widerstandsheizdrahtes von der Verbindungszone weg praktisch nicht auftritt, sondern die durch die Wärmeausdehnung eintretende Verlängerung des Widerstandsheizdrahtes in den Verformungsstellen lokalisiert wird und dort zu einer weiteren Verformung führt, während die Lage der einzelnen Windungen gesamthaft praktisch unverändert bleibt.

Die Erfindung ist in der beiliegenden Zeichnung in einigen Ausführungsbeispielen dargestellt und nachfolgend beschrieben. Es zeigen:

Fig. 1 einen Schnitt durch eine teilweise, schematisch dargestellte Schweissverbindung zweier rohrförmiger Teile unter Verwendung einer getrennten Schweissmuffe in vergrösserter Darstellung.

Fig. 2 einen Schnitt längs der Linie II-II in Fig 1,

Fig. 3 einen Schnitt durch einen teilweise, schematisch dargestellten Formteil zur Herstellung einer Schweissmuffe mit darauf gewickelter Heizwicklung in vergrösserter Darstellung.

Fig. 4 einen Schnitt durch eine teilweise, schematisch dargestellte Schweissmuffe in vergrösserter Darstellung und

Fig. 5 einen Schnitt nach der Linie V-V in Fig. 4.

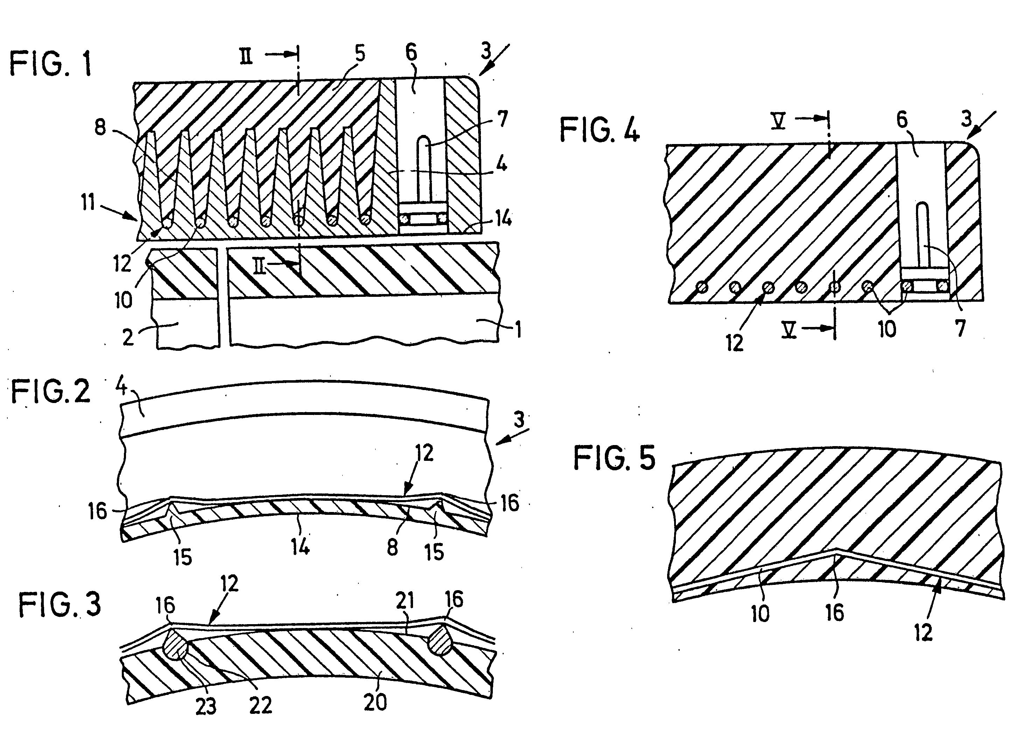

Die in Fig. 1 dargestellte Verbindung zweier nur teilweise dargestellter rohrförmiger Teile 1, 2 aus thermoplastischem Material erfolgt mit Hilfe eines ebenfalls nur teilweise dargestellten, über die beiden rohrförmigen Teile 1, 2 geschobenen Muffenkörpers 3 einer Schweissmuffe aus thermoplastischem Material. Der Muffenkörper 3 setzt sich aus einem Muffen-Innenteil 4 und einem Muffen-Aussenteil 5 zusammen. Am Rand des Muffen-Innenteils 4 ist eine Bohrung 6 vorgesehen, in der ein Kontaktstift 7 untergebracht ist.

Der Muffen-Innenteil 4 weist Rillen 8 auf, in welche ein Widerstandsheizdraht 10 eingelegt ist, der gesamthaft eine Heizwicklung 11 mit in axialer Richtung mit Abstand angeordneten Windungen 12 bildet. Der Widerstandsheizdraht 10 endet im Kontaktstift 7. Am anderen, nicht dargestellten Ende des Muffenkörpers 3 ist ein gleicher Kontaktstift für das andere Ende des Widerstandsheizdrahtes 10 vorgesehen. Die im Grund der Rillen 8 angeordneten Windungen 12 liegen unmittelbar in der Nähe der Innenwandung 14 des Muffen-Innenteils 4. Der Abstand beträgt bei praktischen Ausführungen von Schweissmuffen etwa 0,5 mm.

Der in Fig. 2 dargestellte Schnitt durch den Muffenkörper 3 zeigt einen Schnitt durch eine Rille 8 mit einer darin eingelegten Windung 12 des Widerstandsheizdrahtes 10. Im Grund der Rille 8 sind in Umfangsrichtung mit Abstand wehrförmige, quer zur Rille 8 liegende Stege 15 angeordnet, deren Scheitel bei den üblichen Grössen von Schweissmuffen etwa 1 mm über dem Grund der Rille 8 liegt. Durch die Stege 15 wird erreicht, dass beim Wickeln des Widerstandsheizdrahtes 10 jede Windung 12 eine der Zahl der Stege 15 entsprechende Anzahl Knick- oder Verformungsstellen 16 aufweist. An den Knick- oder Verformungsstellen tritt eine Unstetigkeit des Windungsverlaufs auf, wodurch eine leicht verformbare Stelle geschaffen wird. Wird nun beim Anschliessen der elektrischen Heizung an die Schweissmuffe der Widerstandsheizdraht erwärmt, tritt überraschenderweise kein Abwandern der Windung von der Verbindungszone der zu verbindenden Teile auf. Die durch die Erwärmung auftretende Verlängerung des Widerstandsheizdrahtes 10 wird durch leichte Verformung der Knick- oder Verformungsstellen aufgenommen. Gesamthaft tritt jedoch keine Änderung der Lage der Windung 12 auf. Fehlen die Knick- oder Verformungsstellen 16, wird durch die auftretende Verlängerung der Widerstandsheizdraht 10 radial nach aussen verschoben. Der Widerstandsheizdraht 10 bewegt sich somit von der Verbindungszone der zu verbindenden Teile weg, wodurch eine einwandfreie Verschweissung der zu verbindenden Teile 1, 2 nicht mehr gewährleistet ist. Durch die Anordnung der Knick- oder Verformungsstellen 16 wird in überraschend einfacher Weise dieser schwerwiegende Nachteil vermieden.

In Fig. 4 ist ein Schnitt durch eine weitere Schweissmuffe dargestellt, deren Muffenkörper 3 einteilig ist. Die Windungen 12 des Widerstandsheizdrahtes 10 weisen, wie aus Fig. 5 ersichtlich ist, ebenfalls am Umfang verteilte Knick- oder Verformungsstellen 16 auf. Wie diese erzeugt werden, soll anhand von Fig. 3 erläutert werden, in welcher ein Schnitt durch einen Formteil 20 für das Spritzen einer Schweissmuffe aus thermoplastischem Material dargestellt ist. Der Formteil 20, der auch als Dorn bezeichnet werden kann, kann einteilig oder auch mehrteilig ausgeführt sein. Auf seiner Aussenseite 21 sind axial verlaufende Nuten 22 angeordnet, in denen Stege 23, die entsprechend der Höhe der Stege 15 in Fig. 2 über die Aussenseite 21 des Formteils 20 ragen, geführt sind. Wird nun auf den Formteil 20 die Wicklung 11 gewickelt, so bilden die einzelnen Windungen dieselben Knick- oder Verformungsstellen 16 wie bei den Stegen 15 bei der Schweissmuffe nach Fig. 1 und 2. Dementsprechend ist auch die Wirkung der durch die Stege 23 bewirkten Knick- oder Verformungsstellen 16 dieselbe wie bei der Schweissmuffe nach Fig. 1 und 2.

Der Formteil 20 wird nun in den Formteil zum Spritzen der Schweissmuffe eingelegt und die Windungen 12 der Wicklung umspritzt. Nach dem Spritzen der Schweissmuffe werden die Stege 23 und dann der Formteil 20 entfernt. Trotz des Schrumpfens des aufgespritzten Muffenkörpers 3 wird dank der Knick- oder Verformungsstellen 16 das Auftreten einer Druckspannung im Widerstandsheizdraht 10 praktisch vermieden. Der Widerstandsheizdraht 10 liegt nur wenig innerhalb der Innenwandung des Muffenkörpers 3, siehe Fig. 4 und 5, da wegen der Knick- oder Verformungsstellen 16 praktisch keine Verschiebung der einzelnen Windungen 12 des Widerstandsheizdrahtes 10 auftreten kann.

**Patentansprüche**

1. Schweissmuffe mit einem hülsenförmigen Muffenkörper (3) aus thermoplastischem Material zum Verbinden rohrförmiger thermoplastischer Teile (1, 2), wobei die Erzeugung der zum Schmelzen des thermoplastischen Materials benötigten Schweisswärme in den Windungen einer in der Verbindungszone des Muffenkörpers angeordneten Wicklung eines elektrischen Widerstandsdrahtes (10) durch elektrischen Strom erfolgt, dadurch gekennzeichnet, dass die an der Innenwandung des Muffenkörpers (3) angeordneten Windungen (12) der Widerstandsheizdrahtwicklung in Umfangsrichtung mit Abstand angeordnete, mit einer Unstetigkeit des Windungsverlaufs versehene Verformungsstellen (16) aufweisen.

2. Schweissmuffe nach Anspruch 1, dadurch gekennzeichnet, dass die Verformungsstellen (16) durch Erhebungen (15, 23) in einem zum Wikkeln der Windungen (12) verwendeten Muffenteil (4) bzw. Formteil (20) gebildet sind.

3. Schweissmuffe nach Anspruch 2, dadurch gekennzeichnet, dass die Erhebungen (15) in den Rillen (8) eines Muffen-Innenteils (4) angeordnet sind.

4. Schweissmuffe nach Anspruch 3, dadurch gekennzeichnet, dass die Erhebungen (15) im Grund der Rillen (8) angeordnete Querstege sind.

5. Schweissmuffe nach Anspruch 2, dadurch gekennzeichnet, dass die Erhebungen axial verlaufende Stege (23) sind, die an der Aussenwandung (21) eines Formteils (20), z.B. eines Dorns, angeordnet sind.

6. Schweissmuffe nach Anspruch 5, dadurch gekennzeichnet, dass die Stege (23) in axial verlaufenden Nuten (22) des Formteils (20) entfernbar geführt sind.

## Claims

1. Welding sleeve with a shell-like sleeve member (3) made from thermoplastic material for joining tubular thermoplastic members (1, 2), the welding heat necessary for melting the thermoplastic material being produced by an electrical current in the turns of the winding of an electrical resistance heating wire (10) arranged in the sleeve member joining zone, characterized in that the turns (12) of the resistance filament winding arranged on the inner wall of the sleeve member (3) has peripherally spaced deformation points (6) diverging from the general course of the turn.

2. Welding sleeve according to claim 1, characterized in that the deformation points (16) are formed by ridges (15, 23) in a sleeve portion (4) and/or moulded part (20) used for winding the turns (12).

3. Welding sleeve according to claim 2, characterized in that the ridges (15) are arranged in the grooves (8) of the inner part (4) of a sleeve.

4. Welding sleeve according to claim 3, characterized in that the ridges (15) are transverse members arranged on the bottom of the grooves (8).

5. Welding sleeve according to claim 2, characterized in that the ridges are axially directed members (23) and are arranged on the outer wall (21) of a moulded part (20), e.g. a mandrel.

6. Welding sleeve according to claim 5, characterized in that the members (23) are removably guided in axially directed slots (22) of the moulded part (20).

## Revendications

1. Manchon soudable constitué par un corps de manchon (3) en forme de douille réalisé en une matière thermoplastique et destiné à relier des éléments tubulaires (1, 2) également en matière thermoplastique, la chaleur nécessaire à la fusion de la matière thermoplastique étant produite électriquement par les spires d'un enroulement réalisé au moyen d'un fil de résistance (10) et disposé dans la zone de liaison du corps de manchon, caractérisé en ce que les spires (12) de l'enroulement en fil de résistance disposées sur la paroi intérieure du corps de manchon (3) présentent des endroits de déformation (16) qui créent un trajet discontinu des spires et qui sont prévus à une certaine distance périphérique les uns des autres.

2. Manchon soudable suivant la revendication 1, caractérisé en ce que les endroits de déformation (16) sont obtenus grâce à des éléments saillants (15, 23) prévus sur une partie (4) du manchon ou sur une partie (20) du moule utilisées pour la réalisation des spires (12).

3. Manchon soudable suivant la revendication 2, caractérisé en ce que les éléments saillants (15) sont prévus à l'intérieur des rainures (8) d'une partie intérieure (4) du manchon.

4. Manchon soudable suivant la revendication 3, caractérisé en ce que les éléments saillants (15) sont des barrettes transversales (15) prévues sur le fond des rainures (8).

5. Manchon soudable suivant la revendication 2, caractérisé en ce que les éléments saillants sont des barrettes axiales (23) qui sont disposées sur la paroi extérieure (21) d'une partie (20) d'un moule, par exemple une broche.

6. Manchon soudable suivant la revendication 5, caractérisé en ce que les barrettes (23) sont montées de façon amovible dans des rainures axiales (22) de la partie (20) du moule.

FIG. 4

FIG. 5

FIG. 1

FIG. 2

FIG. 3